# EUROPÄISCHE PATENTANMELDUNG

(11) **EP 2 942 600 A1**
(43) Veröffentlichungstag der Anmeldung: **11.11.2015**
(21) Anmeldenummer: 15166864.7
(22) Anmeldetag: 08.05.2015
(51) Int. Cl.: G01B 11/25, G01B 11/24, G01B 11/27, G01M 11/02

(54) **VERFAHREN UND VORRICHTUNG ZUR MESSUNG EINER DEZENTRIERUNG UND VERKIPPUNG VON FLÄCHEN EINES OPTISCHEN ELEMENTS**

(30) Priorität: 08.05.2014 DE 102014208636
(71) Anmelder: asphericon GmbH, 07747 Jena (DE)
(72) Erfinder: Kiontke, Sven, 07747 Jena (DE)
(74) Vertreter: Liedtke, Markus

(57) **Zusammenfassung**

Die Erfindung betrifft ein Verfahren zur Messung einer Dezentrierung (D) und Verkippung (V) von Flächen eines optischen Elements (1). Erfindungsgemäß werden zumindest alle optisch genutzten und fassungsrelevanten Teiloberflächen (1.1 bis 1.5) einer Oberfläche des optischen Elements (1) und Referenzflächen des optischen Elements (1) vollflächig erfasst und in einem gemeinsamen Koordinatensystem zueinander referenziert, wobei jeweils eine Oberflächenformabweichung der Teiloberflächen (1.1 bis 1.5) und Referenzflächen zu einer zugehörigen Solloberfläche ermittelt wird, wobei aus der jeweiligen Oberflächenformabweichung jeweils eine Lage der Teiloberflächen (1.1 bis 1.5) und Referenzflächen in dem gemeinsamen Koordinatensystem ermittelt wird. Aus der Lage werden in Abhängigkeit einer Form der jeweiligen Teiloberfläche (1.1 bis 1.5) und Referenzfläche in dem Koordinatensystem zumindest eine Verkippung (V) und zumindest eine Dezentrierung (D) ermittelt.

Die Erfindung betrifft weiterhin eine Vorrichtung (2) zur Messung einer Dezentrierung (D) und Verkippung (V) von Flächen eines optischen Elements (1).

## Beschreibung

Die Erfindung betrifft ein Verfahren zur Messung einer Dezentrierung und Verkippung von Flächen eines optischen Elements.

Die Erfindung betrifft weiterhin eine Vorrichtung zur Messung einer Dezentrierung und Verkippung von Flächen eines optischen Elements.

Lagefehler von optischen Achsen von Flächen eines optischen Elements rufen im Allgemeinen Abbildungsfehler hervor, welche bei einer Anwendung des Elements in einem optischen System zu Fehlfunktionen führen können. Derartige Abbildungsfehler sind nicht oder oft nur mit sehr großem Aufwand korrigierbar. Aus diesen Gründen ist es erforderlich, beispielsweise im Rahmen einer Qualitätskontrolle nach der Herstellung des optischen Elements, derartige Lagefehler zu erfassen.

Aus der DE 10 2006 052 047 A1 ist ein Verfahren zur Bestimmung der Lage einer Symmetrieachse einer asphärischen Linsenfläche relativ zu einer Bezugsachse bekannt. Das Verfahren umfasst folgende Schritte:
a) Bestimmen einer Lage eines Krümmungsmittelpunktes eines sphärischen Anteils der Linsenfläche;
b) Bestimmen einer Neigung eines radialen Profils der Linsenfläche in einem Bereich der Linsenfläche, der innerhalb eines Messfensters liegt;
c) Verdrehen der Linsenfläche um eine Drehachse, so dass ein anderer Bereich der Linsenfläche in das Messfenster gelangt;
d) Bestimmen der Neigung eines radialen Profils der Linsenfläche in dem anderen Bereich der Linsenfläche;
e) Mindestens zweifaches Wiederholen der Schritte c) und d);
f) Ermitteln der Lage der Symmetrieachse der asphärischen Linsenfläche relativ zu der Drehachse aus den in den Schritten a) und d) bestimmten Messwerten. Weiterhin wird in der DE 10 2006 052 047 A1 eine Vorrichtung zur Bestimmung der Lage der Symmetrieachse einer asphärischen Linsenfläche relativ zu der Bezugsachse beschrieben. Die Vorrichtung umfasst
   a) einen um eine Drehachse drehbaren Drehtisch, auf dem eine die asphärische Linsenfläche tragende Linse anordbar ist,
   b) einen ersten Autokollimator, dessen optische Achse koaxial zur Drehachse ausgerichtet ist und dessen bildseitiger Brennpunkt in unterschiedlichen Längspositionen entlang seiner optischen Achse positionierbar ist,
   c) einen zweiten Autokollimator, dessen optische Achse einen von Null verschiedenen Winkel zu der Drehachse einschließt und dessen bildseitiger Brennpunkt in unterschiedlichen Längspositionen entlang seiner optischen Achse positionierbar ist, und
   d) eine Auswerteeinrichtung, die aus den von den Autokollimatoren bei verschiedenen Drehwinkeln des Drehtischs gelieferten Messsignalen die Lage der Symmetrieachse der asphärischen Linsenfläche relativ zu der Drehachse ermittelt.

Der Erfindung liegt die Aufgabe zu Grunde, ein gegenüber dem Stand der Technik verbessertes Verfahren und eine verbesserte Vorrichtung zur Messung einer Dezentrierung und Verkippung von Flächen eines optischen Elements anzugeben.

Hinsichtlich des Verfahrens wird die Aufgabe erfindungsgemäß durch die im Anspruch 1 angegebenen Merkmale und hinsichtlich der Vorrichtung durch die im Anspruch 6 angegebenen Merkmale gelöst.

Vorteilhafte Ausgestaltungen der Erfindung sind Gegenstand der Unteransprüche.

In dem Verfahren zur Messung einer Dezentrierung und Verkippung von Flächen eines optischen Elements werden zumindest alle optisch genutzten und fassungsrelevanten Teiloberflächen einer Oberfläche des optischen Elements und Referenzflächen des optischen Elements vollflächig erfasst und in einem gemeinsamen Koordinatensystem zueinander referenziert. Unter einer fassungsrelevanten Teiloberfläche wird dabei eine Teiloberfläche des optischen Elements verstanden, welches bei einer späteren Verwendung zu einer Anordnung des optischen Elements in einer Fassung ausgebildet ist. Weiterhin wird jeweils eine Oberflächenformabweichung der Teiloberflächen und Referenzflächen zu einer zugehörigen Solloberfläche ermittelt, wobei aus der jeweiligen Oberflächenformabweichung jeweils eine Lage der Teiloberflächen und Referenzflächen in dem gemeinsamen Koordinatensystem ermittelt wird. Aus der Lage werden in Abhängigkeit einer Form der jeweiligen Teiloberfläche und Referenzfläche in dem Koordinatensystem zumindest eine Verkippung und zumindest eine Dezentrierung ermittelt.

Das erfindungsgemäße Verfahren ermöglicht in besonders vorteilhafter Weise eine sehr genaue, einfach durchführbare und besonders schnelle Ermittlung der Dezentrierung und Verkippung von Flächen optischer Elemente. Dies resultiert insbesondere daraus, dass aufgrund der vollflächigen Erfassung der Teiloberflächen und Referenzflächen sowie der Ermittlung der Oberflächenformabweichung zumindest der Teiloberflächen und Referenzflächen von einer "idealen" Solloberfläche Oberflächenformabweichungen bei der Ermittlung der Dezentrierung und Verkippung berücksichtigt werden können und somit nicht fehlerhaft in das Ergebnis einfließen. Zusätzlich ist das Verfahren aufgrund der vollflächigen Erfassung der Oberfläche der Vorderseite und Rückseite und der Referenzierung dieser in dem gemeinsamen Koordinatensystem dazu geeignet, Verkippungen und Dezentrierungen bei optischen Elementen mit beliebigen Formen und Oberflächen, insbesondere optischen Linsen mit sphärischen, asphärischen, bisphärischen, biasphärischen und ellipsoiden Oberflächen und optischen Linsen mit Freiformflächen, zu ermitteln.

Aufgrund dessen, dass alle Messungen in einem Arbeitsgang in einer gemeinsamen Vorrichtung in dem gemeinsamen Koordinatensystem durchgeführt werden, können in besonders vorteilhafter Weise aus Umbauten und Umpositionierungen des optischen Elements in andere Vorrichtungen resultierende zeit- und kostenaufwändige Kalibrierungen und Justierungen der Vorrichtung und des optischen Elements in dieser entfallen.

Somit können Verkippungen und Dezentrierungen der Flächen der optischen Elemente einfach, sehr genau und reproduzierbar ermittelt werden, wodurch eine sehr genaue und zuverlässige Angabe von physischen Eigenschaften der optischen Elemente sichergestellt werden kann.

Gemäß einer Weiterbildung des Verfahrens wird zur Erfassung der Teiloberflächen und Referenzflächen des optischen Elements zumindest ein definiertes Muster auf diese projiziert. Die Teiloberflächen, Referenzflächen und das zumindest eine projizierte Muster werden optisch erfasst und anhand einer aus einer Ausformung der Teiloberflächen und Referenzflächen resultierenden Abweichung des zumindest einen definierten Musters von einem Sollmuster wird die Ausformung der Teiloberflächen und Referenzflächen ermittelt. Diese Ausführung ermöglicht es einerseits, die Erfassung und Vermessung der Teiloberflächen und Referenzflächen des optischen Elements berührungslos durchzuführen und zeichnet sich andererseits durch eine hohe Messgenauigkeit und sehr schnelle Durchführbarkeit aus.

In einer Weiterbildung erfolgt die Erfassung aller Teiloberflächen und Referenzflächen gleichzeitig. Somit können zeitaufwändige Arbeitsschritte einer Umpositionierung des optischen Elements innerhalb der Vorrichtung entfallen.

In einer möglichen Ausgestaltung des Verfahrens wird zur Erfassung der Teiloberflächen und Referenzflächen des optischen Elements zumindest ein Entfernungsmesssensor entlang einer Bewegungsachse linear über die Teiloberflächen und Referenzflächen bewegt und es wird eine Entfernung zwischen der entsprechenden Teiloberfläche bzw. Referenzfläche und dem Entfernungsmesssensor ermittelt, wobei das optische Element gleichzeitig derart um eine im Wesentlichen senkrecht zur Bewegungsachse des Entfernungsmesssensors verlaufende Drehachse gedreht wird, dass eine spiralförmige vollflächige Abtastung der entsprechenden Teiloberfläche und Referenzfläche durchgeführt wird. Hierbei spannen die Bewegungsachse und die Drehachse insbesondere eine Fläche auf, in welcher eine optische Achse der optischen Einheit liegt. Somit ist eine sehr genaue und gleichzeitig einfach durchführbare vollflächige Vermessung der Teiloberflächen und Referenzflächen möglich.

Zur weiteren Erhöhung der Genauigkeit der Vermessung und Anpassung dieser an unterschiedliche Oberflächenformen der zu untersuchenden optischen Elemente wird in einer weiteren möglichen Ausgestaltung des Verfahrens der zumindest eine Entfernungsmesssensor derart ausgerichtet, dass dessen optische Achse in jedem Messpunkt senkrecht auf der Teiloberfläche bzw. Referenzfläche verläuft.

Die erfindungsgemäße Vorrichtung zur Messung einer Dezentrierung und Verkippung von Flächen eines optischen Elements umfasst zumindest eine Messeinheit zur Erfassung zumindest aller optisch genutzten und fassungsrelevanten Teiloberflächen einer Oberfläche des optischen Elements und Referenzflächen des optischen Elements, zumindest eine Auswerteeinheit zur Referenzierung der Teiloberflächen und Referenzflächen in einem gemeinsamen Koordinatensystem, zum Vergleich der erfassten Teiloberflächen und Referenzflächen mit einer jeweils zugehörigen Solloberfläche und zur Ermittlung einer Oberflächenformabweichung der Teiloberflächen und Referenzflächen zu der zugehörigen Solloberfläche. Dabei ist aus der jeweiligen Oberflächenformabweichung jeweils eine Lage der Teiloberflächen und Referenzflächen in dem gemeinsamen Koordinatensystem ermittelbar und aus dieser Lage sind in Abhängigkeit einer Form der jeweiligen Teiloberfläche und Referenzfläche in dem gemeinsamen Koordinatensystem zumindest eine Verkippung und zumindest eine Dezentrierung ermittelbar.

Die erfindungsgemäße Vorrichtung ermöglicht in besonders vorteilhafter Weise eine sehr genaue und einfach durchführbare Ermittlung der Dezentrierung und Verkippung der Flächen von optischen Elementen, was insbesondere daraus resultiert, dass aufgrund der vollflächigen Erfassung der Teiloberflächen und Referenzflächen und der Ermittlung der Oberflächenformabweichung der Teiloberflächen und Referenzflächen von einer "idealen" Solloberfläche Oberflächenformabweichungen bei der Ermittlung der Dezentrierung und Verkippung berücksichtigt werden können und somit nicht fehlerhaft in das Ergebnis einfließen. Zusätzlich ist die Vorrichtung dazu geeignet, Verkippungen und Dezentrierungen bei optischen Elementen mit beliebigen Formen und Oberflächen, insbesondere optischen Linsen mit sphärischen, asphärischen, bisphärischen, biasphärischen und ellipsoiden Oberflächen und optischen Linsen mit Freiformflächen, zu ermitteln.

Aufgrund dessen, dass alle Messungen in einem Arbeitsgang gemeinsam in der Vorrichtung in dem gemeinsamen Koordinatensystem durchführbar sind, können aus Umbauten und Umpositionierungen des optischen Elements in andere Vorrichtungen resultierende zeit- und kostenaufwändige Kalibrierungen und Justierungen der Vorrichtung und des optischen Elements in dieser entfallen.

In einer möglichen Ausgestaltung der Vorrichtung umfasst die Messeinheit zumindest eine Projektionseinheit zur Projektion zumindest eines definierten Musters auf die Teiloberflächen und Referenzflächen, zumindest eine optische Erfassungseinheit zur Erfassung der Teiloberflächen und Referenzflächen und des zumindest einen Musters und eine Auswerteeinheit zur Ermittlung einer Ausformung der Teiloberflächen und Referenzflächen aus einer aus der Ausformung der Teiloberflächen und Referenzflächen resultierenden Abweichung des zumindest einen definierten Musters von einem Sollmuster. Diese Ausgestaltung ermöglicht eine berührungslose Erfassung und Vermessung der Teiloberflächen und Referenzflächen bei gleichzeitig hoher Messgenauigkeit und Messgeschwindigkeit.

In einer weiteren möglichen Ausgestaltung ist eine Aufnahmeeinheit zur Aufnahme des optischen Elements vorgesehen, wobei zwei Messeinheiten vorgesehen sind und jeweils zumindest eine Projektionseinheit zur Projektion zumindest eines definierten Musters auf die Teiloberflächen und Referenzflächen und zumindest jeweils zumindest zwei optische Erfassungseinheiten zur Erfassung der Teiloberflächen und Referenzflächen und des zumindest einen Musters umfassen. Dabei ist eine Auswerteeinheit zur Ermittlung einer Ausformung der Teiloberflächen und Referenzflächen aus einer aus der Ausformung der Teiloberflächen und Referenzflächen resultierenden Abweichung des zumindest einen definierten Musters von einem Sollmuster vorgesehen. Eine der Projektionseinheiten ist oberhalb der Aufnahmeeinheit und eine der Projektionseinheiten unterhalb der Aufnahmeeinheit angeordnet. Weiterhin ist zumindest eine der optischen Erfassungseinheiten oberhalb der Aufnahmeeinheit und zumindest eine der optischen Erfassungseinheiten unterhalb der Aufnahmeeinheit angeordnet, wobei die optischen Erfassungseinheiten derart ausgebildet und angeordnet sind, dass die Teiloberflächen und Referenzflächen gleichzeitig optisch erfassbar sind. Hieraus ergibt sich in vorteilhafter Weise zusätzlich zu einer besonders hohen Messgeschwindigkeit eine besonders hohe Messgenauigkeit, da die Messung in nur einem Arbeitsschritt ohne zwischenzeitliche Neuanordnungen, Kalibrierungen und Justierungen der Messeinheit und des optischen Elements durchgeführt werden können.

In einer möglichen Ausgestaltung überschneidet sich hierbei ein Erfassungsbereich der zumindest zwei Erfassungseinheiten in Teilbereichen. Durch Auswertung der erfassten Bilddaten der sich überschneidenden Teilbereiche können in einfacher Weise Ausrichtungsfehler der Erfassungseinheiten ermittelt werden und eine Kalibrierung und Justierung durchgeführt werden.

Gemäß einer möglichen Weiterbildung ist die zumindest eine optische Erfassungseinheit eine Stereokamera und die Auswerteeinheit ist zu einer stereoskopischen Auswertung für von der Stereokamera erfasste Bilddaten ausgebildet. Diese Ausbildung ermöglicht eine sehr robuste dreidimensionale Erfassung und Vermessung der Teiloberflächen und Referenzflächen.

Um eine sehr genaue und gleichzeitig einfach durchführbare vollflächige Vermessung der Teiloberflächen und Referenzflächen zu ermöglichen, umfasst die Erfassungseinheit in einer möglichen weiteren Ausgestaltung der Vorrichtung zumindest einen Entfernungsmesssensor zur Erfassung der Teiloberflächen und Referenzflächen des optischen Elements, wobei der Entfernungsmesssensor entlang einer Bewegungsachse linear über die Teiloberflächen und Referenzflächen bewegbar ist und zur Ermittlung einer Entfernung zwischen der entsprechenden Teiloberfläche oder Referenzfläche und dem Entfernungsmesssensor vorgesehen ist.

In einer weiteren möglichen Ausgestaltung ist eine Aufnahmeeinheit zur Aufnahme und Halterung des optischen Elements vorgesehen, wobei zumindest ein zur Halterung des optischen Elements vorgesehener Halteabschnitt der Aufnahmeeinheit um eine im Wesentlichen senkrecht zur Bewegungsachse des zumindest einen Entfernungsmesssensors verlaufenden Drehachse drehbar ist. Die Aufnahmeeinheit ermöglicht eine sichere Halterung des optischen Elements, wobei dieses zur Durchführung des gesamten Verfahrens lediglich einmal in der Halterung positioniert werden muss. Dadurch entfallen aufwändige Umbauten sowie Kalibrierungen und Justierungen der Vorrichtung und der optischen Einheit.

Gemäß einer Weiterbildung der Vorrichtung ist der Entfernungsmesssensor ein lichtwellenbasiertes Interferometer. Mittels eines solchen lichtwellenbasierten Interferometers, welches insbesondere mit einer Vielzahl von Wellenlängen arbeitet, sind die Oberflächen des optischen Elements berührungsfrei und sehr exakt erfassbar.

Um eine besonders hohe Genauigkeit der Vermessung und eine einfache Anpassung dieser an unterschiedliche Oberflächenformen der zu untersuchenden optischen Elemente zu erzielen, ist der zumindest eine Entfernungsmesssensor gemäß einer möglichen Ausgestaltung der Vorrichtung derart variabel positionierbar an einer Halte- und Bewegungsvorrichtung angeordnet, dass eine optische Achse des Entfernungsmesssensors in jedem Messpunkt senkrecht auf der Oberfläche der Vorderseite oder der Oberfläche der Rückseite verläuft.

Ausführungsbeispiele der Erfindung werden im Folgenden anhand von Zeichnungen näher erläutert.

Darin zeigen:
- Figur 1: schematisch ein optisches Element mit einer Dezentrierung,
- Figur 2: schematisch ein optisches Element mit einer Dezentrierung und einer Verkippung,
- Figur 3: schematisch einen Ablauf eines erfindungsgemäßen Verfahrens, und
- Figur 4: schematisch eine erfindungsgemäße Vorrichtung.

Einander entsprechende Teile sind in allen Figuren mit den gleichen Bezugszeichen versehen.

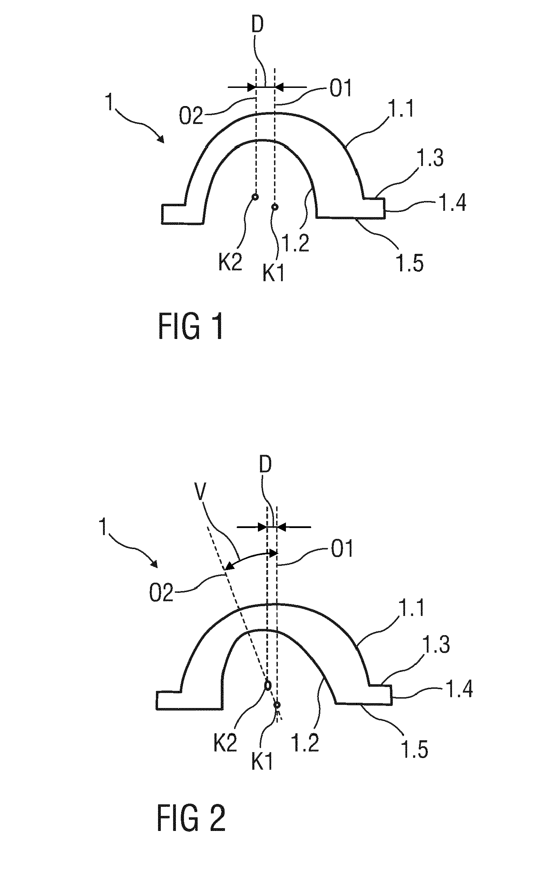

In **Figur 1** ist ein als optische Linse ausgebildetes optisches Element 1 mit einer als sphärische Fläche ausgebildeten ersten optisch genutzten Teiloberfläche 1.1, einer als asphärische Fläche ausgebildeten zweiten optisch genutzten Teiloberfläche 1.2 sowie drei fassungsrelevanten Teiloberflächen 1.3 bis 1.5 dargestellt. Unter einer fassungsrelevanten Teiloberfläche 1.3 bis 1.5 wird vorliegend eine Teiloberfläche 1.3 bis 1.5 des optischen Elements 1 verstanden, welches bei einer späteren Verwendung des optischen Elements 1 zu einer Anordnung desselben in einer nicht gezeigten Fassung ausgebildet ist.

In der dargestellten Ausbildung des optischen Elements 1 sind optische Achsen O1, O2, welche durch einen jeweiligen Krümmungsmittelpunkt K1, K2 der Teiloberfläche 1.1 und Teiloberfläche 1.2 verlaufen, parallel zueinander verschoben angeordnet. Somit entsteht zwischen den Teiloberflächen 1.1, 1.2 eine so genannte Dezentrierung D.

**Figur 2** zeigt ein ebenfalls als optische Linse ausgebildetes optisches Element 1 mit einer als sphärische Fläche ausgebildeten optisch genutzten ersten Teiloberfläche 1.1 und einer als asphärische Fläche ausgebildeten optisch genutzten zweiten Teiloberfläche 1.2 sowie drei fassungsrelevanten Teiloberflächen 1.3 bis 1.5. Dabei sind die optischen Achsen O1, 02 der Teiloberflächen 1.1, 1.2 ebenfalls zueinander verschoben angeordnet, so dass zwischen der ersten und zweiten Teiloberfläche 1.1, 1.2 eine Dezentrierung D entsteht. Zusätzlich ist zwischen den optischen Achsen O1, 02 der ersten und zweiten Teiloberfläche 1.1, 1.2 ein Winkel größer Null ausgebildet, so dass zwischen den Teiloberflächen 1.1, 1.2 zusätzlich eine so genannte Verkippung V ausgebildet ist.

Die in den Figuren 1 und 2 dargestellten Lagefehler der optischen Achsen O1, 02 bzw. Symmetrieachsen der Teiloberflächen 1.1, 1.2 rufen im Allgemeinen Abbildungsfehler hervor, welche bei einer Anwendung des Elements 1 in einem optischen System zu Fehlfunktionen führen können. Derartige Abbildungsfehler sind nicht oder oft nur mit sehr großem Aufwand korrigierbar.

Aus diesen Gründen ist es erforderlich, beispielsweise im Rahmen einer Qualitätskontrolle nach der Herstellung des optischen Elements 1, eine Lage der optischen Achsen O1, O2 der Teiloberflächen 1.1, 1.2 relativ zu einer Bezugsachse hochpräzise bestimmen zu können.

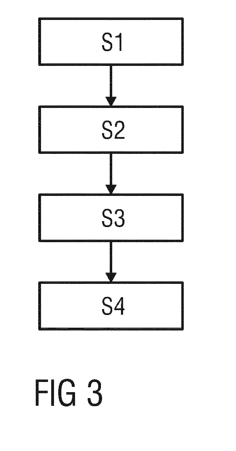

In **Figur 3** ist ein Ablauf eines möglichen Ausführungsbeispiels des erfindungsgemäßen Verfahrens dargestellt, mittels welchem eine derart hochpräzise Bestimmung durchführbar ist.

Hierbei werden zur Messung einer Dezentrierung D und Verkippung V von Flächen eines optischen Elements 1 in einem ersten Verfahrensschritt S1 alle optisch genutzten und fassungsrelevanten Teiloberflächen 1.1 bis 1.5 einer Oberfläche des optischen Elements 1 und nicht gezeigte Referenzflächen des optischen Elements 1 vollflächig erfasst und in einem gemeinsamen Koordinatensystem zueinander referenziert.

Anschließend wird in einem zweiten Verfahrensschritt S2 jeweils eine Oberflächenformabweichung der Teiloberflächen 1.1 bis 1.5 und der nicht gezeigten Referenzflächen zu einer jeweils zugehörigen Solloberfläche ermittelt.

Die Erfassung der Teiloberflächen 1.1 bis 1.5 und der nicht gezeigten Referenzflächen erfolgt dabei beispielsweise gemäß einem ersten Ausführungsbeispiel des Verfahrens mittels eines in "LUPHOScan - Fast non-contact 3D topology measurement of spheres, aspheres, flats and freeform; Luphos GmbH, Weberstraße 21, 55130 Mainz, Deutschland; 05/2013" beschriebenen Verfahrens und/oder einer dort beschriebenen Vorrichtung. Hierbei wird insbesondere eine spiralförmige vollflächige Abtastung der entsprechenden Oberfläche durchgeführt, so dass ein dreidimensionales Abbild der entsprechenden erfasst wird. Um dies zu realisieren, wird zur Erfassung der Teiloberflächen 1.1 bis 1.5 und Referenzflächen des optischen Elements 1 in nicht näher dargestellter Weise zumindest ein Entfernungsmesssensor entlang einer Bewegungsachse linear über die Teiloberflächen 1.1 bis 1.5 und Referenzflächen bewegt und es wird eine Entfernung zwischen der entsprechenden Teiloberfläche 1.1 bis 1.5 bzw. Referenzfläche und dem Entfernungsmesssensor ermittelt. Gleichzeitig wird das optische Element derart um eine im Wesentlichen senkrecht zur Bewegungsachse des Entfernungsmesssensors verlaufende Drehachse gedreht, dass die spiralförmige vollflächige Abtastung der entsprechenden Teiloberfläche 1.1 bis 1.5 und der Referenzfläche durchgeführt wird. Dabei wird der Entfernungsmesssensor derart ausgerichtet, dass dessen optische Achse in jedem Messpunkt jeweils senkrecht zu der zu vermessenden Teiloberfläche 1.5 und Referenzfläche verläuft. Bei dem Entfernungsmesssensor handelt es sich beispielsweise um ein lichtwellenbasiertes Interferometer.

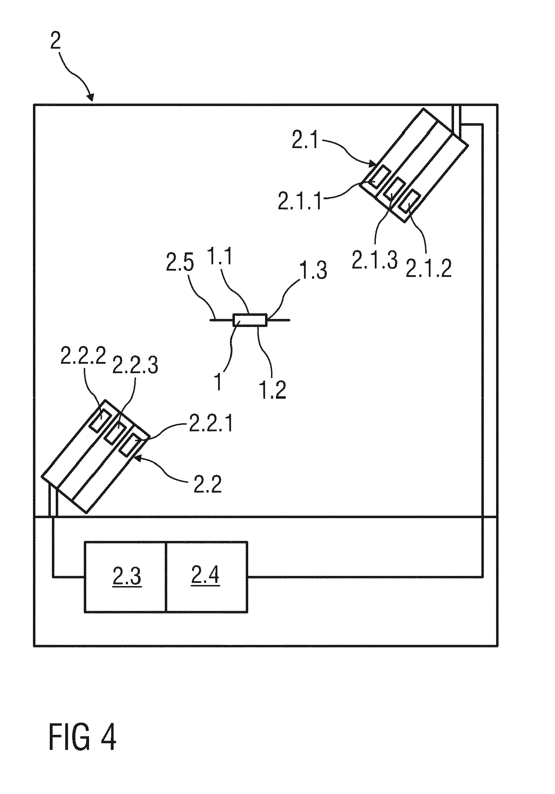

Alternativ zu dieser Erfassung der Teiloberflächen 1.1 bis 1.5 und der nicht gezeigten Referenzflächen erfolgt die Erfassung gemäß einem zweiten Ausführungsbeispiel beispielsweise mittels einer in Figur 4 näher dargestellten Vorrichtung 2, indem auf die Teiloberflächen 1.1 bis 1.5 und nicht gezeigten Referenzflächen des optischen Elements 1 zumindest ein definiertes Muster projiziert wird. Dabei werden die Teiloberflächen 1.1 bis 1.5, Referenzflächen und das zumindest eine projizierte Muster optisch erfasst. Anhand einer aus einer Ausformung der Teiloberflächen 1.1 bis 1.5 und Referenzflächen resultierenden Abweichung des zumindest einen definierten Musters von einem Sollmuster wird die Ausformung der Teiloberflächen 1.1 bis 1.5 und Referenzflächen ermittelt. Dabei erfolgt die Erfassung und Projektion gleichzeitig für alle Teiloberflächen 1.1 bis 1.5 und Referenzflächen gleichzeitig.

Alternativ ist es auch möglich, dass die Erfassung und Projektion in einem dritten Ausführungsbeispiel des Verfahrens in mehreren Schritten durchgeführt wird, beispielsweise zunächst für eine Oberseite und anschließend für eine Rückseite des optischen Elements 1.

Alternativ zu den beschriebenen alternativen Ausführungen der Ausführungsbeispiele des Verfahrens ist auch eine kumulative Verwendung der Ausführungsbeispiele möglich, wobei hierdurch eine Verbesserung einer Genauigkeit bei der Ermittlung der Oberflächenabweichungen und eine Nachprüfbarkeit und Plausibilisierung der Ergebnisse der jeweiligen Ausführungsbeispiele möglich sind.

Unabhängig davon ist das Ergebnis dieser Erfassung insbesondere eine so genannte Punktwolke, durch welche die Teiloberflächen 1.1 bis 1.5 und die nicht gezeigten Referenzflächen dargestellt sind. Diese Punktwolke wird dann mit für das jeweilige optische Element 1 hinterlegten Solldaten verglichen, wobei aus einer Abweichung bzw. Differenz der Werte der Punktwolke von den Solldaten die Oberflächenabweichung ermittelt wird.

Nach der Ermittlung der Oberflächenformabweichung der Teiloberflächen 1.1 bis 1.5 und der nicht gezeigten Referenzflächen zu der jeweils zugehörigen Solloberfläche wird in einem dritten Verfahrensschritt S3 aus der jeweiligen Oberflächenformabweichung jeweils eine Lage der Teiloberflächen 1.1 bis 1.5 und Referenzflächen in dem gemeinsamen Koordinatensystem ermittelt.

Anschließend erfolgt in einem vierten Verfahrensschritt S4 eine Ermittlung der zumindest einen Verkippung V und zumindest einen Dezentrierung D aus der Lage der Teiloberflächen 1.1 bis 1.5 und Referenzflächen in Abhängigkeit einer Form der jeweiligen Teiloberfläche 1.1 bis 1.5 und Referenzfläche in dem Koordinatensystem. Eine Anzahl möglicher Verkippungen V und Dezentrierungen D hängt dabei von der Form der jeweiligen Teiloberfläche 1.1 bis 1.5 und der jeweiligen Referenzfläche ab. Beispielsweise weist eine asphärische Oberfläche eine mögliche Verkippung V und eine Dezentrierung D auf. Eine Freiformfläche kann dagegen bis zu drei mögliche Verkippungen V und bis zu drei mögliche Dezentrierungen D aufweisen.

Hierbei wird insbesondere zunächst die Verkippung V innerhalb des gemeinsamen Koordinatensystems ermittelt und das optische Element 1 wird derart in die Solldaten eingepasst bzw. eingefitted, dass die zumindest eine Verkippung V minimiert wird. In dieser Position wird anschließend die zumindest eine Dezentrierung D des optischen Elements ermittelt.

Eine Korrektur der zumindest einen Verkippung V und Dezentrierung D ist anschließend durch eine Oberflächenbearbeitung des optischen Elements 1 möglich, wobei die Bearbeitung vorzugsweise ebenfalls in der Vorrichtung 2 mit Bezug zum gemeinsamen Koordinatensystem erfolgt, um eine besonders hohe Genauigkeit zu erzielen.

Alternativ oder zusätzlich wird geprüft, ob sich das optische Element 1 innerhalb vorgegebener Spezifikation befindet. Die gewonnenen Informationen werden insbesondere dazu verwendet, das optische Element 1 hinsichtlich seiner späteren Lage in einem optischen System zu optimieren, um die größtmögliche Leistungsfähigkeit zu erreichen.

**Figur 4** zeigt ein mögliches Ausführungsbeispiel einer erfindungsgemäßen Vorrichtung 2 zur Messung zumindest einer Dezentrierung D und zumindest einer Verkippung V der Teiloberflächen 1.1 bis 1.3 und Referenzflächen eines optischen Elements 1. Das optische Element 1 ist dabei stark vereinfacht mit zwei optisch genutzten Teiloberflächen 1.1, 1.2 und einer fassungsrelevanten Teiloberfläche 1.2. Die Vorrichtung 2 ist jedoch zur Messung von Dezentrierungen D und Verkippungen V beliebiger optischer Elemente 1 mit einer beliebigen Anzahl und Anordnung von optisch genutzten und fassungsrelevanten Teiloberflächen 1.1 bis 1.5 und Referenzflächen ausgebildet.

Die Vorrichtung 2 umfasst im dargestellten Ausführungsbeispiel zwei Messeinheiten 2.1, 2.2 zur Erfassung zumindest aller optisch genutzten und fassungsrelevanten Teiloberflächen 1.1 bis 1.3 der Oberfläche des optischen Elements 1 und nicht gezeigter Referenzflächen des optischen Elements 1, wobei eine Messeinheit 2.1 in einem oberen Teil der Vorrichtung 2 auf eine Oberseite des optischen Elements 1 gerichtet ist und eine weitere Messeinheit 2.2 in einem unteren Teil der Vorrichtung 2 auf eine Unterseite des optischen Elements 1 gerichtet ist.

Weiterhin umfasst die Vorrichtung 2 eine Auswerteeinheit 2.3 zur Referenzierung der Teiloberflächen 1.1 bis 1.3 und Referenzflächen in einem gemeinsamen Koordinatensystem, zum Vergleich der erfassten Teiloberflächen 1.1 bis 1.3 und Referenzflächen mit einer jeweils zugehörigen Solloberfläche und zur Ermittlung einer Oberflächenformabweichung der Teiloberflächen 1.1 bis 1.3 und Referenzflächen zu der zugehörigen Solloberfläche.

Ferner umfasst die Vorrichtung 2 eine Steuereinheit 2.4, wobei die Auswerteeinheit 2.3 und die Steuereinheit 2.4 im dargestellten Ausführungsbeispiel eine bauliche Einheit bilden. Alternativ ist auch eine getrennte Ausbildung möglich.

Das optische Element 1 ist mittels einer Aufnahmeeinheit 2.5 innerhalb der Vorrichtung 2 gehalten, wobei die Aufnahmeeinheit 2.5 entsprechende Befestigungsmittel zur sicheren Befestigung des optischen Elements 1 umfasst und derart ausgebildet ist, dass das optische Element 1 mittels der Messeinheiten 2.1, 2.2 gleichzeitig von allen Seiten möglichst vollständig erfassbar ist. Dabei ist die Aufnahmeeinheit 2.5 definiert bezüglich des Koordinatensystems ausgerichtet.

Die Messeinheiten 2.1, 2.2 umfassen jeweils zwei als so genannte CCD-Kamera ausgebildete optische Erfassungseinheiten 2.1.1, 2.1.2, 2.2.1, 2.2.2 zur Erfassung der Teiloberflächen 1.1 bis 1.3 und Referenzflächen. Hierbei sind die optischen Erfassungseinheiten 2.1.1, 2.1.2, 2.2.1, 2.2.2 in einer möglichen Ausgestaltung derart ausgebildet und angeordnet, dass deren Erfassungsbereiche sich zumindest teilweise überschneiden. In einer weiteren möglichen Ausgestaltung sind die Messeinheiten 2.1, 2.2 bewegbar angeordnet, wobei eine jeweilige Bewegung mittels der Steuereinheit 2.4 gesteuert wird.

Weiterhin umfassen die Messeinheiten 2.1, 2.2 jeweils eine Projektionseinheit 2.1.3, 2.2.3, mittels welchen zumindest ein definiertes Muster auf die Teiloberflächen 1.1 bis 1.3 und Referenzflächen projiziert wird. Insbesondere sind die Messeinheiten 2.1, 2.2 gemäß der DE 196 37 682 A1 ausgebildet und zu einer selbstkalibrierenden Streifenprojektion geeignet.

Hierzu werden auf die Teiloberflächen 1.1 bis 1.3 und Referenzflächen des zu vermessenden optischen Elements 1 mittels der Projektionseinheit 2.1.3, 2.2.3 für die Ober- und Unterseite des optischen Elements 1 jeweils aus zwei verschiedenen Richtungen definierte Muster, beispielsweise Streifenmuster, projiziert, welche mittels der Erfassungseinheiten 2.1.1, 2.1.2, 2.2.1, 2.2.2 erfasst werden. Insbesondere werden auf die Teiloberflächen 1.1 bis 1.3 und Referenzflächen als Muster jeweils aus zwei verschiedenen Richtungen nacheinander zwei Gittersequenzen, welche um 90° zueinander verdreht sind, projiziert.

Die Messung erfolgt dabei, insbesondere wie in der DE 196 37 682 A1 beschrieben, mittels mathematischer Algorithmen, wobei aus erfassten Bildern der Teiloberflächen 1.1 bis 1.3 und Referenzflächen mindestens vier Phasenmesswerte für jeden Messpunkt und aus den Phasenmesswerten Koordinaten des entsprechenden Messpunktes sowie Geometrie- und Abbildungseigenschaften der Messeinheiten 2.1, 2.2 bestimmt werden. Hierzu wird mittels der hochauflösenden, insbesondere jeweils als CCD-Kamera ausgebildeten, Erfassungseinheiten 2.1.1, 2.1.2, 2.2.1, 2.2.2 eine Intensität der Streifen des Musters registriert und unter Nutzung bekannter Phasenauswerteverfahren werden zwei voneinander unabhängige absolute Phasenmesswerte pro Messpunkt der Erfassungseinheiten 2.1.1, 2.1.2, 2.2.1, 2.2.2 pro Richtung ermittelt. Anschließend erfolgt eine Phasenkorrelation der Daten der jeweils zwei Erfassungseinheiten 2.1.1, 2.1.2, 2.2.1, 2.2.2 der Messeinheiten 2.1, 2.2 für jede einzelne Richtung, welche als Resultat korrespondierende Pixel in den jeweils zwei Erfassungseinheiten 2.1.1, 2.1.2, 2.2.1, 2.2.2 ermittelt. Für diese werden unter der Verwendung der Methodik der Selbstkalibrierung gemäß der DE 196 37 682 A1 simultan Systemparameter und dreidimensionale Koordinatenwerte auf dem zu vermessenen optischen Element 1 berechnet.

Mittels der Auswerteeinheit 2.3 wird aus den erfassten Verläufen der Muster eine Ausformung der Teiloberflächen 1.1 bis 1.3 und Referenzflächen ermittelt und anschließend eine Abweichung der Ausformung der Teiloberflächen 1.1 bis 1.5 und Referenzflächen aus einer resultierenden Abweichung der Muster von einem Sollmuster ermittelt.

Aus der Abweichung der Ausformung der Teiloberflächen 1.1 bis 1.3 und Referenzflächen von einem Sollwert, das heißt aus Oberflächenformabweichung, wird, wie beschrieben, jeweils eine Lage der Teiloberflächen 1.1 bis 1.3 und Referenzflächen in dem gemeinsamen Koordinatensystem ermittelt und aus der Lage werden in Abhängigkeit der Form der jeweiligen Teiloberfläche 1.1 bis 1.3 und Referenzfläche in dem Koordinatensystem zumindest eine Verkippung V und zumindest eine Dezentrierung D ermittelt.

### BEZUGSZEICHENLISTE

- 1: optisches Element
- 1.1 bis 1.5: Teiloberfläche
- 2: Vorrichtung
- 2.1: Messeinheit
- 2.1.1: Erfassungseinheit
- 2.1.2: Erfassungseinheit
- 2.1.3: Projektionseinheit
- 2.2: Messeinheit
- 2.2.1: Erfassungseinheit
- 2.2.2: Erfassungseinheit
- 2.2.3: Projektionseinheit
- 2.3: Auswerteeinheit
- 2.4: Steuereinheit
- 2.5: Aufnahmeeinheit

- D: Dezentrierung
- K1: Krümmungsmittelpunkt
- K2: Krümmungsmittelpunkt
- O1: optische Achse
- 02: optische Achse
- S1 bis S4: Verfahrensschritt
- V: Verkippung

## Patentansprüche

1. Verfahren zur Messung einer Dezentrierung (D) und Verkippung (V) von Flächen eines optischen Elements (1),
**dadurch gekennzeichnet, dass**
- zumindest alle optisch genutzten und fassungsrelevanten Teiloberflächen (1.1 bis 1.5) einer Oberfläche des optischen Elements (1) und Referenzflächen des optischen Elements (1) vollflächig erfasst werden und in einem gemeinsamen Koordinatensystem zueinander referenziert werden und
- jeweils eine Oberflächenformabweichung der Teiloberflächen (1.1 bis 1.5) und Referenzflächen jeweils relativ zu einer zugehörigen, für das optische Element (1) hinterlegten Solloberfläche ermittelt wird,
- wobei aus der jeweiligen Oberflächenformabweichung jeweils eine Lage der Teiloberflächen (1.1 bis 1.5) und Referenzflächen in dem gemeinsamen Koordinatensystem ermittelt wird,
- wobei aus der Lage in Abhängigkeit einer Form der jeweiligen Teiloberfläche (1.1 bis 1.5) und Referenzfläche in dem Koordinatensystem zumindest eine Verkippung (V) und zumindest eine Dezentrierung (D) ermittelt werden.

2. Verfahren nach Anspruch 1,
**dadurch gekennzeichnet, dass**
- zur Erfassung der Teiloberflächen (1.1 bis 1.5) und Referenzflächen des optischen Elements (1) zumindest ein definiertes Muster auf diese projiziert wird,
- die Teiloberflächen (1.1 bis 1.5), Referenzflächen und das zumindest eine projizierte Muster optisch erfasst werden und
- anhand einer aus einer Ausformung der Teiloberflächen (1.1 bis 1.5) und Referenzflächen resultierenden Abweichung des zumindest einen definierten Musters von einem Sollmuster die Ausformung der Teiloberflächen (1.1 bis 1.5) und Referenzflächen ermittelt wird.

3. Verfahren nach Anspruch 2,
**dadurch gekennzeichnet, dass** die Erfassung aller Teiloberflächen (1.1 bis 1.5) und Referenzflächen gleichzeitig erfolgt.

4. Verfahren nach einem der Ansprüche 1 bis 3,
**dadurch gekennzeichnet, dass**
- zur Erfassung der Teiloberflächen (1.1 bis 1.5) und Referenzflächen des optischen Elements (1) zumindest ein Entfernungsmesssensor entlang einer Bewegungsachse linear über die Teiloberflächen (1.1 bis 1.5) und Referenzflächen bewegt wird und eine Entfernung zwischen der entsprechenden Teiloberfläche (1.1 bis 1.5) bzw. Referenzfläche und dem Entfernungsmesssensor ermittelt wird,
- wobei das optische Element (1) gleichzeitig derart um eine im Wesentlichen senkrecht zur Bewegungsachse des Entfernungsmesssensors verlaufende Drehachse gedreht wird, dass eine spiralförmige vollflächige Abtastung der entsprechenden Teiloberfläche (1.1 bis 1.5) und Referenzfläche durchgeführt wird.

5. Verfahren nach Anspruch 4,
**dadurch gekennzeichnet, dass** der zumindest eine Entfernungsmesssensor derart ausgerichtet wird, dass dessen optische Achse in jedem Messpunkt jeweils senkrecht auf der zu vermessenden Teiloberfläche (1.1 bis 1.5) und Referenzfläche verläuft.

6. Vorrichtung (2) zur Messung einer Dezentrierung (D) und Verkippung (V) von Flächen eines optischen Elements (1) mit
- zumindest einer Messeinheit (2.1, 2.2) zur Erfassung zumindest aller optisch genutzten und fassungsrelevanten Teiloberflächen (1.1 bis 1.5) einer Oberfläche des optischen Elements (1) und Referenzflächen des optischen Elements (1),
- zumindest einer Auswerteeinheit (2.3) zur Referenzierung der Teiloberflächen (1.1 bis 1.5) und Referenzflächen in einem gemeinsamen Koordinatensystem, zum Vergleich der erfassten Teiloberflächen (1.1 bis 1.5) und Referenzflächen mit einer jeweils zugehörigen Solloberfläche und zur Ermittlung einer Oberflächenformabweichung der Teiloberflächen (1.1 bis 1.5) und Referenzflächen jeweils relativ zu der zugehörigen, für das optische Element (1) hinterlegten Solloberfläche,
- wobei aus der jeweiligen Oberflächenformabweichung jeweils eine Lage der Teiloberflächen (1.1 bis 1.5) und Referenzflächen in dem gemeinsamen Koordinatensystem ermittelbar ist und
- wobei aus der Lage in Abhängigkeit einer Form der jeweiligen Teiloberfläche (1.1 bis 1.5) und Referenzfläche in dem gemeinsamen Koordinatensystem zumindest eine Verkippung (V) und zumindest eine Dezentrierung (D) ermittelbar sind.

7. Vorrichtung (2) nach Anspruch 6,
**gekennzeichnet durch**
- zumindest eine Projektionseinheit (2.1.3, 2.2.3) zur Projektion zumindest eines definierten Musters auf die Teiloberflächen (1.1 bis 1.5) und Referenzflächen,
- zumindest eine optische Erfassungseinheit (2.1.1, 2.1.2, 2.2.1, 2.2.2) zur Erfassung der Teiloberflächen (1.1 bis 1.5) und Referenzflächen und des zumindest einen Musters und
- eine Auswerteeinheit (2.3) zur Ermittlung einer Ausformung der Teiloberflächen (1.1 bis 1.5) und Referenzflächen aus einer aus der Ausformung der Teiloberflächen (1.1 bis 1.5) und Referenzflächen resultierenden Abweichung des zumindest einen definierten Musters von einem Sollmuster umfasst.

8. Vorrichtung (2) nach Anspruch 6 oder 7,
**dadurch gekennzeichnet, dass**
- eine Aufnahmeeinheit (2.5) zur Aufnahme des optischen Elements (1) vorgesehen ist,
- wobei zwei Messeinheiten (2.1, 2.2) vorgesehen sind und jeweils zumindest eine Projektionseinheit (2.1.3, 2.2.3) zur Projektion zumindest eines definierten Musters auf die Teiloberflächen (1.1 bis 1.5) und Referenzflächen und
- zumindest zwei optische Erfassungseinheiten (2.1.1, 2.1.2, 2.2.1, 2.2.2) zur Erfassung der Teiloberflächen (1.1 bis 1.5) und Referenzflächen und des zumindest einen Musters umfassen,
- eine Auswerteeinheit (2.3) zur Ermittlung einer Ausformung der Teiloberflächen (1.1 bis 1.5) und Referenzflächen aus einer aus der Ausformung der Teiloberflächen (1.1 bis 1.5) und Referenzflächen resultierenden Abweichung des zumindest einen definierten Musters von einem Sollmuster vorgesehen ist,
- wobei eine der Projektionseinheiten (2.1.3, 2.2.3) oberhalb der Aufnahmeeinheit (2.5) und eine der Projektionseinheiten (2.1.3, 2.2.3) unterhalb der Aufnahmeeinheit (2.5) angeordnet ist und
- zumindest eine der optischen Erfassungseinheiten (2.1.1, 2.1.2, 2.2.1, 2.2.2) oberhalb der Aufnahmeeinheit (2.5) und zumindest eine der optischen Erfassungseinheiten (2.1.1, 2.1.2, 2.2.1, 2.2.2) unterhalb der Aufnahmeeinheit (2.5) angeordnet ist,
- wobei die optischen Erfassungseinheiten (2.1.1, 2.1.2, 2.2.1, 2.2.2) derart ausgebildet und angeordnet sind, dass die Teiloberflächen (1.1 bis 1.5) und Referenzflächen gleichzeitig optisch erfassbar sind.

9. Vorrichtung (2) nach Anspruch 7 oder 8,
**dadurch gekennzeichnet, dass**
- die zumindest eine optische Erfassungseinheit (2.1.1, 2.1.2, 2.2.1, 2.2.2) eine Stereokamera ist und
- die Auswerteeinheit (2.3) zu einer stereoskopischen Auswertung von der Stereokamera erfasster Bilddaten ausgebildet ist.

10. Vorrichtung (2) nach einem der Ansprüche 6 bis 9,
**dadurch gekennzeichnet, dass**
- die Messeinheit (2.1, 2.2) zumindest einen Entfernungsmesssensor zur Erfassung der Teiloberflächen (1.1 bis 1.5) und Referenzflächen des optischen Elements (1) umfasst,
- wobei der Entfernungsmesssensor entlang einer Bewegungsachse linear über die Teiloberflächen (1.1 bis 1.5) und Referenzflächen bewegbar ist und zur Ermittlung einer Entfernung zwischen der entsprechenden Teiloberfläche (1.1 bis 1.5) oder Referenzfläche und dem Entfernungsmesssensor vorgesehen ist.

11. Vorrichtung (2) nach Anspruch 10,
**dadurch gekennzeichnet, dass** der Entfernungsmesssensor ein lichtwellenbasiertes Interferometer ist.
